(19) **Europäisches Patentamt**
**European Patent Office**
**Office européen des brevets**

(11) **EP 1 918 326 B1**

(12) **EUROPEAN PATENT SPECIFICATION**

(45) Date of publication and mention
of the grant of the patent:
**21.10.2009 Bulletin 2009/43**

(51) Int Cl.:
*C08L 33/20* (2006.01)   *C08L 65/00* (2006.01)
*C09D 5/24* (2006.01)   *H01B 1/12* (2006.01)
*H01G 9/00* (2006.01)

(21) Application number: **07025180.6**

(22) Date of filing: **17.06.2004**

(54) **Conductive composition**

Leitfähige Zusammensetzung

Composition conductrice

(84) Designated Contracting States:
**BE DE**

(30) Priority: **18.06.2003 JP 2003173429**
**20.06.2003 JP 2003176426**
**03.09.2003 JP 2003311929**
**05.11.2003 JP 2003375667**
**21.01.2004 JP 2004013032**
**04.02.2004 JP 2004027627**
**02.04.2004 JP 2004109702**

(43) Date of publication of application:
**07.05.2008 Bulletin 2008/19**

(62) Document number(s) of the earlier application(s) in
accordance with Art. 76 EPC:
**04746313.8 / 1 634 922**

(73) Proprietor: **Shin-Etsu Polymer Co. Ltd.**
**Chuo-ku**
**Tokyo 103-0023 (JP)**

(72) Inventors:
• **Yoshida, Kazuyoshi**
**Tokyo (JP)**
• **Kawaguchi, Toshiyuki**
**Tokyo (JP)**
• **Ning, Tailu**
**Tokyo (JP)**
• **Masahiro, Yasushi**
**Tokyo (JP)**

(74) Representative: **Berkenbrink, Kai-Oliver**
**Patentanwälte Becker und Kollegen**
**Turmstraße 22**
**40878 Ratingen (DE)**

(56) References cited:
JP-A- 5 009 308     JP-A- 6 020 692
JP-A- 2001 135 551     JP-A- 2002 265 781
JP-A- 2004 175 373     JP-A- 2004 212 993

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a conductive composition and the production method thereof.
This application claims priority from Japanese Patent Application No. 2004-109702 filed on April 2, 2004, the disclosure of which is incorporated by reference herein.

BACKGROUND ART

(Background Art of the Aspect)

As described above, the conjugated conductive polymer can be prepared by an electrolytic polymerization method and a chemical oxidation polymerization method.
The electrolytic polymerization method is a method of dipping an electrode in a solution containing a monomer constituting a conjugated conductive polymer and an electrolyte serving as a dopant, and synthesizing the conjugated conductive polymer in the form of a film on the surface, and is not suited for mass production.
The chemical oxidation polymerization method is a method of polymerizing a monomer constituting a conjugated conductive polymer in a solution in the presence of an oxidizing agent and/or an oxidation polymerization catalyst. There is no restriction as in case of the electrolytic polymerization method, and mass production can be theoretically conducted. However, this method actually has the following problem.
The conjugated conductive polymer has a grown n-conjugation system in the main chain and therefore it may not exhibit solvent solubility and compatibility with the other resin. Therefore, according to the chemical oxidation polymerization method, solubility in a solvent deteriorates with the growth of the conjugation system of the main chain. Therefore, a solid powder insoluble in the solvent may be obtained and it is difficult to form a uniform film on the other solid surface.
In addition, according to the chemical oxidation polymerization method, it is difficult to obtain a conjugated conductive polymer having high electrical conductivity. This reason is considered as follows. A polymer having low conjugation properties (that is, low electrical conductivity) is produced as by-product by the side reaction due to an oxidizing agent and the resulting polymer is excessively oxidized by the reoxidation reaction due to an oxidizing agent, and also the resulting polymer is attacked by protons produced by the dehydrogenation reaction of the reactive monomer to give a polymer having low structural order (that is, low electrical conductivity). To solve such a problem, there has conventionally been made such an attempt that transition metal ions are introduced as a catalyst and the reaction is conducted at low temperature for a long time. However, it is insufficient to the production of a polymer having low structural order due to proton attack.
As means for solublization of the conjugated conductive polymer, for example, introduction of a specific functional group (generally long-chain alkyl group, carbonyl group, or sulfonic acid group) into a conjugated conductive polymer, dispersion of a binder and the co-existence of a polyanion are studied. It is also disclosed that a conductive composition having excellent electrical conductivity is obtained by introducing a specific functional group into a conjugated conductive polymer in the presence of a polyanion (Japanese Unexamined Patent Application, First Publication No. Hei 06-208198).
Also there is pointed out a problem that codoping of anions or cations used as the oxidizing agent and the oxidation polymerization catalyst are caused in the polymer and these ions are remained.
Electrical conductivity and thermostability of the conjugated conductive polymer drastically vary with the kind of a dopant. Furthermore, small ion-sized inorganic anions or cations are liable to be dispersed in the molecule, and particularly in high temperature and high humidity atmosphere, de-doping may occur. Therefore, doping and remaining of anions or cations cause deterioration of heat resistance (heat deterioration resistance), moisture resistance, long-term stability of the resulting conjugated conductive polymer and the like. To solve such a problem, there has conventionally been proposed that anions such as hydroxyaryl sulfonate and toluene sulfonate are used in combination as a dopant (Japanese Unexamined Patent Application, First Publication No. Hei 07-238149).
However, the technique described in Japanese Unexamined Patent Application, First Publication No. Hei 06-208198 is not effective against problems such as residual ions and deterioration of heat resistance. In the technique described in Japanese Unexamined Patent Application, First Publication No. Hei 07-238149, compounds such as hydroxyaryl sulfonate used as the dopant has a large molecular size and is therefore slightly soluble in water, and thus it is hardly introduced into the polymer and an improvement in conductivity cannot be expected.
Under these circumstances, the present aspect has been completed and an object thereof is to provide a conductive composition which has high electrical conductivity and is excellent in stability of electrical conductivity to the external environment and is also excellent in heat resistance, moisture resistance and long-term stability, and a method for producing the same. Another object is to provide a method for producing a conductive composition in which the amount of residual ions is reduced.

## DISCLOSURE OF THE INVENTION

(Disclosure of the Invention of the Aspect)

The present inventors have intensively studied so as to achieve the above object and arrived at the present aspect.

The aspect of the present invention is a conductive composition comprising a polyanion (A), in which an anion group is bonded with a main chain via an ester group, and a conjugated conductive polymer (B).

## BEST MODE FOR CARRYING OUT THE INVENTION

Preferred examples of the present invention will now be described. However, the present invention is not limited to the following examples. For example, constituent elements of these examples and aspects can be corresponded or appropriately combined with each other.

(Best Mode of the Aspect)

The present aspect is directed to a conductive composition containing a polyanion and a conjugated conductive polymer, and a method for preparing the same.

[Conductive Composition]

The conductive composition of the present aspect contains a polyanion (A) in which an anion group is bonded with a main chain via an ester group, and a conjugated conductive polymer (B). One of or two or more polyanions (A) and conjugated conductive polymers (B) can be used, respectively.

The composition of the present aspect is preferably obtained by chemical oxidation polymerization of a monomer of the conjugated conductive polymer (B) in the presence of the polyanion (A).

In the composition of the present aspect, the conjugated conductive polymer (B) exhibits high electrical conductivity and is also excellent in solvent solubility and compatibility with the other resin. The reason is considered as follows.

When chemical oxidation polymerization of the monomer of the conjugated conductive polymer (B) is conducted in the presence of the polyanion (A), as the main chain of the conjugated conductive polymer (B) grows, the conjugated conductive polymer (B) is doped with an anion group of the polyanion (A) to produce a salt with the conjugated conductive polymer (B) and the group. Particularly, when the anion group is an anion group such as sulfonic acid group, a strong ionic bond is formed. Consequently, the conjugated conductive polymer (B) is strongly drawn to the main chain of the polyanion (A) and the main chain of the conjugated conductive polymer (B) grows along the main chain of the polyanion (A) to obtain a regularly arranged conjugated conductive polymer (B). The conjugated conductive polymer (B) thus synthesized reacts with the polyanion (A) to produce a huge number of salts, which are fixed to the main chain of the polyanion (A).

In the present aspect, it is considered that, by allowing an ester group to exist between a main chain and an anion group in the polyanion (A), solvent solubility of the conjugated conductive polymer (B) integrated with the polyanion (A) and compatibility with the other resin are noticeably improved by excellent solvent solubility of the ester group and excellent compatibility with the other resin.

In the present aspect, the use of the polyanion (A) having an ester group enables excellent stability of electrical conductivity to the external environment as well as remarkably excellent heat resistance, moisture resistance and long-term stability.

That is, it is considered that the following process arises. The ester group has such a property that it is chemically unstable in an acid or a base and is likely to be hydrolyzed. For example, the ester group is converted into carboxylic acid as a result of hydrolysis in an acidic state and is therefore stabilized. In the conductive composition, before the conjugated conductive polymer (B) is attacked by a radical generated in a high temperature environment, an ester of the polyanion (A) having weak bond energy is attacked in place of the conjugated conductive polymer. Accordingly, the radical disappears and thus the conjugated conductive polymer is stabilized and deterioration of the conjugated conductive polymer (B) bearing electrical conductivity due to heat is suppressed.

By the same reason, when the ester group of the polyanion (A) is sacrificed to the reoxidation reaction due to the oxidizing agent and the like and/or attack due to protons generated by the dehydrogenation reaction of the reactive monomer, the production of a polymer having low electrical conductivity is suppressed and excellent conjugated conductive polymer (B) having high electrical conductivity is prepared in a stable manner.

[Polyanion (A)]

A basic skeleton of the polyanion (A) is not specifically limited and examples thereof include polyalkylene, polyalkenylene, polyimide, polyamide and polyester (these compounds may have a substituent).

The polyalkylene contains a methylene group as a repeating unit in a main chain. Specific examples thereof include polyethylene, polypropylene, polybutene, polypentene, polyhexene, polyvinyl alcohol, polyvinyl phenol, poly 3,3,3-trifluoropropylene, polyacrylonitrile, poly(meth)acrylate, polystyrene, and copolymers thereof. In the present aspect, poly(meth)acrylate and/or a copolymer thereof are preferably used.

The polyalkenylene is a polymer comprising a constituent unit containing one or more unsaturated bonds in a main chain.

Examples of the constituent unit include propenylene, 1-methyl-propenylene, 1-butyl-propenylene, 1-decyl-propenylene, 1-cyano-propenylene, 1-phenyl-propenylene, 1-hydroxy-propenylene, 1-butenylene, 1-methyl-1-butenylene, 1-ethyl-1-butenylene, 1-octyl-1-butenylene, 1-pentadecyl-1-butenylene, 2-methyl-1-butenylene, 2-ethyl-l-butenylene, 2-butyl-1-butenylene, 2-hexyl-1-butenylene, 2-octyl-1-butenylene, 2-decyl-1-butenylene, 2-dodecyl-1-butenylene, 2-phenyl-1-butenylene, 2-butenylene, 1-methyl-2-butenylene, 1-ethyl-2-butenylene, 1-octyl-2-butenylene, 1-pentadecyl-2-butenylene, 2-methyl-2-butenylene, 2-ethyl-2-butenylene, 2-butyl-2-butenylene, 2-hexyl-2-butenylene, 2-octyl-2-butenylene, 2-decyl-2-butenylene, 2-dodecyl-2-butenylene, 2-phenyl-2-butenylene, 2-propylenephenyl-2-butenylene, 3-methyl-2-butenylene, 3-ethyl-2-butenylene, 3-butyl-2-butenylene, 3-hexyl-2-butenylene, 3-octyl-2-butenylene, 3-decyl-2-butenylene, 3-dodecyl-2-butenylene, 3-phenyl-2-butenylene, 3-propylenephenyl-2-butenylene, 2-pentenylene, 4-propyl-2-pentenylene, 4-propyl-2-pentenylene, 4-butyl-2-pentenylene, 4-hexyl-2-pentenylene, 4-cyano-2-pentenylene, 3-methyl-2-pentenylene, 4-ethyl-2-pentenylene, 3-phenyl-2-pentenylene, 4-hydroxy-2-pentenylene and hexenylene.

Examples of the polyimide include condensates of acid anhydrides such as pyromellitic dianhydride, biphenyltetracarboxylic dianhydride, benzophenonetetracarboxylic dianhydride, 2,2,3,3-tetracarboxydiphenyl ether dianhydride and 2,2-[4,4'-di(dicarboxyphenyloxy)phenyl]propane dianhydride with diamines such as oxydianiline, paraphenylenediamine, metaphenylenediamine and benzophenonediamine.

Examples of the polyamide include polyamide 6, polyamide 6,6, polyamide 6,10, polyamide 6,12, polyamide 11, polyamide 12, and copolymers thereof.

Examples of the polyester include polyvinyl ester, polyethylene terephthalate, polybutylene terephthalate, and copolymers thereof.

The polyanion (A) is that in which an anion group is bonded with a main chain via an ester group, but may optionally contain the other substituent at the portion where an anion group of the main chain is not bonded. Furthermore, a substituent may be further introduced into the substituent bonded with the main chain.

The substituent is not specifically limited and examples thereof include alkyl group, hydroxy group, carboxyl group, cyano group, phenyl group, hydroxyphenyl group, alkoxy group and carbonyl group. One or more substiteunts can be introduced.

Among these substituents, an alkyl group is excellent in solubility or dispersibility in a polar or nonpolar solvent, and compatibility with or dispersibility in the other resin. A hydroxy group easily forms a hydrogen bond with a hydrogen atom and is excellent in solubility in an organic solvent as well as compatibility with, dispersibility in and adhesion to the other resin. A cyano group and a hydroxyphenyl group are excellent in compatibility with and solubility in a polar resin and are also excellent in heat resistance. Therefore, these substituents are preferably introduced. Particularly, alkyl group, hydroxy group and cyano group are preferably introduced.

Examples of the alkyl group include noncyclic alkyl groups such as methyl group, ethyl group, propyl group, n-butyl group, i-butyl group, t-butyl group, pentyl group, hexyl group, octyl group, decyl group and dodecyl group; and cyclic alkyl groups such as cyclopropyl group, cyclopentyl group and cyclohexyl group. Among these alkyl groups, an alkyl group having 1 to 12 carbon atoms is preferable taking accounts of solubility in an organic solvent, dispersibility in a resin and steric hindrance.

Examples of the aspect of introduction of a hydroxy group include aspect in which a hydroxy group is directly bonded with a main chain of a polyanion, aspect in which a hydroxy group is bonded with the end of an alkyl group having 1 to 7 carbon atoms bonded with a main chain of a polyanion, and aspect in which a hydroxy group is bonded with the end of an alkenyl group having 2 to 7 carbon atoms bonded with a main chain of a polyanion. Among these aspects, an aspect in which a hydroxy group is bonded with the end of an alkyl group having 1 to 6 carbon atoms bonded with a main chain of a polyanion is preferable in view of solubility in an organic solvent and compatibility with the other resin.

Similarly, examples of the aspect of introduction of a cyano group include aspect in which a cyano group is directly bonded with a main chain of a polyanion, aspect in which a cyano group is bonded with the end of an alkyl group having 1 to 7 carbon atoms bonded with a main chain of a polyanion, and aspect in which a cyano group is bonded with the end of an alkenyl group having 2 to 7 carbon atoms bonded with a main chain of a polyanion.

Similarly, examples of the aspect of introduction of a hydroxyphenyl group include aspect in which a hydroxyphenyl group is directly bonded with a main chain of a polyanion, aspect in which a hydroxyphenyl group is bonded with the end of an alkyl group having 1 to 6 carbon atoms bonded with a main chain of a polyanion, and aspect in which a hydroxyphenyl group is bonded with the end of an alkenyl group having 2 to 6 carbon atoms bonded with a main chain of a polyanion.

The kind and introduction aspect of an ester group, which exists between a main chain and an anion group, is not specifically limited. Examples thereof include alkyl-based ester group or aromatic ester group bonded directly with a main chain of a polyanion, and an alkyl-based ester group or aromatic ester group bonded to a main chain via the other functional group such as alkylene group, aromatic ring, alkenylene group and the like (which may have a substituent).

In the present aspect, the polyanion (A) must have an ester group between a main chain and an anion group, and an ester group bonded with no anion group may be introduced, if necessary.

The anion group is not specifically limited and is preferably a group represented by the general formula: $-O-SO_3^-X^+$, $-SO_3^-X^+$, $-O-PO_2^-X^+$ or $-COO^-X^+$ (in the respective formulas, X represents a hydrogen atom or an alkali metal atom). Among these groups, a sulfonic acid group is preferable because it is excellent in dopant effect and forms a strong ionic bond with the conjugated conductive polymer (B).

The aspect of bonding of an anion group with an ester group is not specifically limited and examples thereof include direct bond and direct bond via the other functional group such as alkylene group, aromatic ring or alkenylene group (which may have a substituent). Particularly, when the anion group is bonded with the ester group via the other functional group such as alkylene group, aromatic ring or alkenylene group (which may have a substituent), the main chain of the conjugated conductive polymer (B) can be removed from the main chain of the polyanion (A) and thus sufficient solvent solubility of the polyanion (A) and compatibility with a resin can be secured, preferably.

In the present aspect, the polyanion (A) must have an anion group bonded with an ester group, but may have an ester group bonded with no anion group, if necessary.

The polyanion (A) is obtained, for example, by (1) anionization of a polymer compound having an ester group in a side chain, (2) esterification and anionization of a polymer compound having a carboxylic acid group in a side chain, or (3) polymerization of a polymerizable monomer (MX) having an ester group bonded with an anion group.

(1) Examples of the anionization of a polymer compound having an ester group in a side chain include transesterification using an anion group-containing compound, introduction of a sulfonic acid group or a sulfuric acid group due to fuming sulfuric acid or concentrated sulfuric acid, introduction of a sulfonic acid group due to a sulfonic acid compound and introduction of a phosphoric acid group due to phosphoric acid.

(2) Examples of the esterification and anionization of a polymer compound having a carboxylic acid group include esterification due to reaction of carboxylic acid group of poly(meth)acrylate or a copolymer thereof with an anion group-containing hydroxy compound or the like.

(3) When the polyanion (A) is polymerized, a monomer (MY) other than the polymerizable monomer (MX) can also be copolymerized for the purpose of improving solvent solubility, compatibility with the other resin and film forming properties. The polymerization method is not specifically limited and includes a method of dissolving or dispersing a raw monomer (including a monomer mixture) in a solvent and polymerizing the monomer solution in the presence of an oxidizing agent and/or an oxidation polymerization catalyst.

Examples of the polymerizable monomer (MX) include, but are not limited to, ethyl acrylate sulfonic acid ($CH_2CH-COO-(CH_2)_2-SO_3H$) and a salt thereof ($CH_2CH-COO-(CH_2)_2-SO_3^-X^+$), propyl acrylate sulfonic acid ($CH_2CH-COO-(CH_2)_3-SO_3H$) and a salt thereof ($CH_2CH-COO-(CH_2)_3-SO_3^-X^+$), acrylic acid-t-butylsulfonic acid ($CH_2CH-COO-C(CH_3)_2CH_2-SO_3H$) and a salt thereof ($CH_2CH-COO-C(CH_3)_2CH_2-SO_3^-X^+$), acrylic acid-n-butylsulfonic acid ($CH_2CH-COO-(CH_2)_4-SO_3H$) and a salt thereof ($CH_2CH-COO-(CH_2)_4-SO_3^-X^+$), ethyl allylate sulfonic acid ($CH_2CHCH_2-COO-(CH_2)_2-SO_3H$) and a salt thereof ($CH_2CHCH_2-COO-(CH_2)_2-SO_3^-X^+$), allylic acid-t-butylsulfonic acid ($CH_2CHCH_2-COO-C(CH_3)_2CH_2-SO_3H$) and a salt thereof ($CH_2CHCH_2-COO-C(CH_3)_2CH_2-SO_3^-X^+$), ethyl 4-pentenoate sulfonic acid ($CH_2CH(CH_2)_2-COO-(CH_2)_2-SO_3H$) and a salt thereof ($CH_2CH(CH_2)_2-COO-(CH_2)_2-SO_3^-X^+$), propyl 4-pentenoate sulfonic acid ($CH_2CH(CH_2)_2-COO-(CH_2)_3-SO_3H$) and a salt thereof ($CH_2CH(CH_2)_2-COO-(CH_2)_3-SO_3^-X^+$), 4-pentenoic acid-n-butylsulfonic acid ($CH_2CH(CH_2)_2-COO-(CH_2)_4-SO_3H$) and a salt thereof ($CH_2CH(CH_2)_2-COO-(CH_2)_4-SO_3^-X^+$), 4-pentenoic acid-t-butylsulfonic acid ($CH_2CH(CH_2)_2-COO-C(CH_3)_2CH_2-SO_3H$) and a salt thereof ($CH_2CH(CH_2)_2-COO-C(CH_3)_2CH_2-SO_3^-X^+$), phenylene 4-pentenoate sulfonic acid ($CH_2CH(CH_2)_2-COO-C_6H_4-SO_3H$) and a salt thereof ($CH_2CH(CH_2)_2-COO-C_6H_4-SO_3^-X^+$), naphthalene 4-pentenoate sulfonic acid ($CH_2CH(CH_2)_2-COO-C_{10}H_8-SO_3H$) and a salt thereof ($CH_2CH(CH_2)_2-COO-C_{10}H_8-SO_3^-X^+$), ethyl methacrylate sulfonic acid ($CH_2C(CH_3)-COO-(CH_2)_2-SO_3H$) and a salt thereof ($CH_2C(CH_3)-COO-(CH_2)_2-SO_3^-X^+$), propyl methacrylate sulfonic acid ($CH_2C(CH_3)-COO-(CH_2)_3-SO_3H$) and a salt thereof ($CH_2C(CH_3)-COO-(CH_2)_3-SO_3^-X^+$), methacrylic acid-t-butyl-

sulfonic acid ($CH_2C(CH_3)$-COO-$C(CH_3)_2CH_2$-$SO_3H$) and a salt thereof ($CH_2C(CH_3)$-COO-$C(CH_3)_2CH_2$-$SO_3^-X^+$), methacrylic acid-n-butylsulfonic acid ($CH_2C(CH_3)$-COO-$(CH_2)_4$-$SO_3H$) and a salt thereof ($CH_2C(CH_3)$-COO-$(CH_2)_4$-$SO_3^-X^+$), phenylene methacrylate sulfonic acid ($CH_2C(CH_3)$-COO-$C_6H_4$-$SO_3H$) and a salt thereof ($CH_2C(CH_3)$-COO-$C_6H_4$-$SO_3^-X^+$), and naphthalene methacrylate sulfonic acid ($CH_2C(CH_3)$-COO-$C_{10}H_8$-$SO_3H$) and a salt thereof ($CH_2C(CH_3)$-COO-$C_{10}H_8$-$SO_3^-X^+$) (in the respective formulas, X represents a hydrogen atom or an alkali metal atom). These polymerizable monomers can be used alone or in combination.

Examples of the polymerizable monomer (MY) which is optionally used in combination include, but are not limited to, ethylene, propene, 1-butene, 2-butene, 1-pentene, 2-pentene, 1-hexene, 2-hexene, styrene, p-methylstyrene, p-ethylstyrene, p-butylstyrene, 2,4,6-trimethylstyrene, p-methoxystyrene, α-methylstyrene, 2-vinylnaphthalene, 6-methyl-2-vinylnaphthalene, 1-vinylimidazole, vinylpyridine, vinyl acetate, acrylaldehyde, acrylnitrile, N-vinyl-2-pyrrolidone, N-vinylacetamide, N-vinylformamide, N-vinylimidazole, acrylamide, N,N-dimethylacrylamide, (meth)acrylic acid, methyl (meth)acrylate, ethyl (meth)acrylate, propyl (meth)acrylate, n-butyl (meth)acrylate, i-butyl (meth)acrylate, t-butyl (meth)acrylate, i-octyl (meth)acrylate, i-nonylbutyl (meth)acrylate, 2-ethylhexyl (meth)acrylate, lauryl (meth)acrylate, allyl (meth)acrylate, tridecyl (meth)acrylate, stearyl (meth)acrylate, isobornyl (meth)acrylate, cyclohexyl (meth)acrylate, benzyl (meth)acrylate, ethylcarbitol (meth) acrylate, phenoxyethyl (meth)acrylate, 2-hydroxyethyl (meth)acrylate, 2-hydroxypropyl (meth)acrylate, methoxyethyl (meth)acrylate, ethoxyethyl (meth)acrylate, methoxybutyl (meth)acrylate, acryloyl morpholine, vinylamine, N,N-dimethylvinylamine, N,N-diethylvinylamine, N,N-dibutylvinylamine, N,N-di-t-butylvinylamine, N,N-diphenylvinylamine, N-vinyl carbazole, vinyl alcohol, vinyl chloride, vinyl fluoride, methyl vinyl ether, ethyl vinyl ether, cyclopropene, cyclobutene, cyclopentene, cyclohexene, cycloheptene, cyclooctene, 2-methylcyclohexene, vinylphenol, 1,3-butadiene, 1-methyl-1,3-butadiene, 2-methyl-1,3-butadiene, 1,4-dimethyl-1,3-butadiene, 1,2-dimethyl-1,3-butadiene, 1,3-dimethyl-1,3-butadiene, 1-octyl-1,3-butadiene, 2-octyl-1,3-butadiene, 1-phenyl-1,3-butadiene, 2-phenyl-1,3-butadiene, 1-hydroxy-1,3-butadiene, 2-hydroxy-1,3-butadiene, vinylsulfonic acid and a salt thereof, allylsulfonic acid and a salt thereof, methacrylsulfonic acid and a salt thereof, styrenesulfonic acid and a salt thereof, methacryloxybenzenesulfonic acid a and a salt thereof, allyloxybenzenesulfonic acid and a salt thereof, α-methylstyrenesulfonic acid and a salt thereof, acrylamide-t-butylsulfonic acid and a salt thereof, 2-acrylamide-2-methylpropanesulfonic acid and a salt thereof, cyclobutene-3-sulfonic acid and a salt thereof, isoprenesulfonic acid and a salt thereof, 1,3-butadiene-1-sulfonic acid and a salt thereof, 1-methyl-1,3-butadiene-2-sulfonic acid and a salt thereof, and 1-methyl-1,3-butadiene-4-sulfonic acid and a salt thereof. The (meth)acrylic acid in the context is a general term which indicates acrylic acid, methacrylic acid and the like.

The solvent used for the polymerization is not specifically limited as far as it dissolves or disperses a raw monomer and does not adversely affect oxidizability of the oxidizing agent and/or the oxidation catalyst. Examples of the solvent include polar solvents such as water, N-methyl-2-pyrrolidone, N,N'-dimethylformamide, N,N'-dimethylacetamide, dimethyl sulfoxide, hexamethylene phosphortriamide, acetonitrile and benzonitrile; phenols such as cresol, phenol and xylenol; alcohols such as methanol, ethanol, propanol and butanol; ketones such as acetone and methyl ethyl ketones; hydrocarbons such as hexane, benzene and toluene; and carboxylic acids such as formic acid and acetic acid. These solvents can be used alone or in combination.

The oxidizing agent and the oxidation polymerization catalyst are not specifically limited as far as they oxidize the raw monomer. Examples thereof include peroxodisulfates such as platinum catalyst, ammonium peroxodisulfate, sodium peroxodisulfate and potassium peroxodisulfate; transition metal compounds such as ferric chloride, ferric sulfate, ferric nitrate and cupric chloride; metal oxides such as silver oxide and cesium oxide; peroxides such as hydrogen peroxide and ozone; organic peroxides such as benzoyl peroxide; and oxygen.

(Conjugated Conductive Polymer (B))

The conjugated conductive polymer (B) is not specifically limited as far as it is an organic polymer in which the main chain has a conjugation system. In view of electrical conductivity, polypyrroles, polythiophenes, polythiophenevinylenes, polyanilines, polyphenylenes, polyphenylenevinylenes, polyacenes, and copolymers thereof are preferably used. Particularly, polypyrroles, polythiophenes and polyanilines are preferably used because they are chemically stable in an air and are excellent in handling properties.

In the present aspect, since the polyanion (A) coexists, solvent solubility of the conjugated conductive polymer (B) and compatibility (dispersibility) with the other resin are excellent without introducing a specific functional group into the conjugated conductive polymer (B). It is preferred to introduce a functional group such as alkyl group, carboxy group, sulfonic acid group, alkoxy group, hydroxy group and the like into the conjugated conductive polymer (B) because solvent solubility and compatibility (dispersibility) with the other resin can be more improved.

Specific examples of the conjugated conductive polymer (B), which is preferably used, include polypyrroles such as polypyrrole, poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,9-dimethylpyrrole), poly(3,4-dibutylpyrrole), poly(3-carboxylpyrrole), poly(3-methyl-4-carboxylpyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-hexyloxypyrrole) and poly(3-methyl-4-hexyloxypyrrole);

polythiophenes such as polythiophene, poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3,4-dihydroxythiophene), poly(3,4-dimethoxythiophene), poly(3,4-diethoxythiophene), poly(3,4-dipropoxythiophene), poly(3,4-dibutoxythiophene), poly(3,4-dihexyloxythiophene), poly(3,4-diheptyloxythiophene), poly(3,4-dioctyloxythiophene), poly(3,4-didecyloxythiophene), poly(3,4-didodecyloxythiophene), poly(3,4-ethylenedioxythiophene), poly(3,4-propylenedioxythiophene), poly(3,4-butenedioxythiophene), poly(3-methyl-4-methoxythiophene), poly(3-methyl-4-ethoxythiophene), poly(3-carboxythiophene), poly(3-methyl-4-carboxythiophene), poly(3-methyl-4-carboxyethylthiophene) and poly(3-methyl-4-carboxybutylthiophene); and

polyanilines such as polyaniline, poly(2-methylaniline), poly(3-isobutylaniline), poly(2-anilinesulfonic acid) and poly(3-anilinesulfonic acid).

The conjugated conductive polymer (B) is obtained, for example, by chemical oxidation polymerization in which a polymerizable conjugated monomer (MZ) is dissolved or dispersed in a solvent and the monomer solution is polymerized by using an oxidizing agent and/or an oxidation polymerization catalyst. If necessary, a monomer other than the polymerizable conjugated monomer (MZ) can be polymerized.

The polymerizable conjugated monomer (MZ) is not specifically limited as far as it has a conjugation system in the molecule and an organic polymer having a conjugation system in the main chain is obtained after the polymerization which uses the monomer. Examples thereof include pyrroles such as pyrrole, 3-methylpyrrole, 3-ethylpyrrole, 3-n-propylpyrrole, 3-butylpyrrole, 3-octylpyrrole, 3-decylpyrrole, 3-dodecylpyrrole, 3,4-dimethylpyrrole, 3,4-dibutylpyrrole, 3-carboxylpyrrole, 3-methyl-4-carboxylpyrrole, 3-methyl-4-carboxyethylpyrrole, 3-methyl-4-carboxybutylpyrrole, 3-hydroxypyrrole, 3-methoxypyrrole, 3-ethoxypyrrole, 3-butoxypyrrole, 3-hexyloxypyrrole, 3-methyl-4-hexyloxypyrrole and 3-methyl-4-hexyloxypyrrole;

thiophenes such as thiophene, 3-methylthiophene, 3-ethylthiophene, 3-propylthiophene, 3-butylthiophene, 3-hexylthiophene, 3-heptylthiophene, 3-octylthiophene, 3-decylthiophene, 3-dodecylthiophene, 3-octadecylthiophene, 3-bromothiophene, 3-chlorothiophene, 3-iodothiophene, 3-cyanothiophene, 3-phenylthiophene, 3,4-dimethylthiophene, 3,4-dibutylthiophene, 3-hydroxythiophene, 3-methoxythiophene, 3-ethoxythiophene, 3-butoxythiophene, 3-hexyloxythiophene, 3-heptyloxythiophene, 3-octyloxythiophene, 3-decyloxythiophene, 3-dodecyloxythiophene, 3-octadecyloxythiophene, 3,4-dihydroxythiophene, 3,4-dimethoxythiophene, 3,4-diethoxythiophene, 3,4-dipropoxythiophene, 3,4-dibutoxythiophene, 3,4-dihexyloxythiophene, 3,4-diheptyloxythiophene, 3,4-dioctyloxythiophene, 3,4-didecyloxythiophene, 3,4-didodecyloxythiophene, 3,4-ethylenedioxythiophene, 3,4-propylenedioxythiophene, 3,4-butenedioxythiophene, 3-methyl-4-methoxythiophene, 3-methyl-4-ethoxythiophene, 3-carboxythiophene, 3-methyl-4-carboxythiophene, 3-methyl-4-carboxyethylthiophene and 3-methyl-4-carboxybutylthiophene; and

anilines such as aniline, 2-methylaniline, 3-isobutylaniline, 2-anilinesulfonic acid and 3-anilinesulfonic acid.

These monomers can be used alone or in combination.

As the solvent, the oxidizing agent and the oxidation polymerization catalyst used for the polymerization, those exemplified in the synthesis of the polyanion (A) can be used.

For the purpose of adjusting electrical conductivity and the like, the conductive composition of the present aspect may contain an anion compound (E) other than the polyanion (A), if necessary. That is, a oxidation-reduction potential of conjugated electrons of the conjugated conductive polymer (B) can be controlled by doping with the anion compound (E) other than the polyanion (A), for example, an acceptable or donative dopant.

Examples of the acceptable dopant include halogen compounds, Lewis acids, proton acids, organic cyano compounds and organic metal compounds, and examples of the donative dopant include alkali metals, alkali earth metals and quaternary amine compounds.

Examples of the halogen compound suited for use as the acceptable dopant include chlorine ($Cl_2$), bromine ($Br_2$), iodine ($I_2$), iodine chloride (ICl), iodine bromide (IBr) and iodine fluoride (IF).

Examples of the Lewis acid include $PF_5$, $AsF_5$, $SbF_5$, $BF_5$, $BCl_5$, $BBr_5$ and $SO_3$.

Examples of the proton acid include inorganic acids such as hydrochloric acid, sulfuric acid, nitric acid, phosphoric acid, fluoroboric acid, hydrofluoric acid and perchloric acid; and organic acids such as organic carboxylic acids, phenols and organic sulfonic acids. Among these organic acids, organic carboxylic acids and organic sulfonic acids are preferably used in view of the doping effect.

As organic carboxylic acids, there can be used those in which one or more carboxylic acid groups are bonded with aliphatic compounds, aromatic compounds, cyclic aliphatic compounds and the like. Examples thereof include formic acid, acetic acid, oxalic acid, benzoic acid, phthalic acid, maleic acid, fumaric acid, malonic acid, tartaric acid, citric acid, lactic acid, succinic acid, monochloroacetic acid, dichloroacetic acid, trichloroacetic acid, trifluoroacetic acid, nitroacetic acid and triphenylacetic acid.

As organic sulfonic acids, there can be used those in which one or more sulfonic acid groups are bonded with aliphatic, aromatic compounds, cyclic aliphatic compounds and the like.

Examples of the compound having one sulfonic acid group include methanesulfonic acid, ethanesulfonic acid, 1-propanesulfonic acid, 1-butanesulfonic acid, 1-hexanesulfonic acid, 1-heptansulfonic acid, 1-octanesulfonic acid, 1-nonanesulfonic acid, 1-decanesulfonic acid, 1-dodecanesulfonic acid, 1-tetradecanesulfonic acid, 1-pentadecanesulfonic acid, 2-bromoethanesulfonic acid, 3-chloro-2-hydroxypropanesulfonic acid, trifluoromethanesulfonic acid, colistinmethanesulfonic acid, 2-acrylamide-2-methylpropanesulfonic acid, aminomethanesulfonic acid, 1-amino-2-naphthol-4-sulfonic acid, 2-amino-5-naphthol-7-sulfonic acid, 3-aminopropanesulfonic acid, N-cyclohexyl-3-aminopropanesulfonic acid, benzenesulfonic acid, p-toluenesulfonic acid, xylenesulfonic acid, ethylbenzenesulfonic acid, propylbenzenesulfonic acid, butylbenzenesulfonic acid, pentylbenzenesulfonic acid, hexylbenzenesulfonic acid, heptylbenzenesulfonic acid, octylbenzenesulfonic acid, nonylbenzenesulfonic acid, decylbenzenesulfonic acid, undecylbenzenesulfonic acid, dodecylbenzenesulfonic acid, pentadecylbenzenesulfonic acid, hexadecylbenzenesulfonic acid, 2,4-dimethylbenzenesulfonic acid, dipropylbenzenesulfonic acid, butylbenzenesulfonic acid, 4-aminobenzenesulfonic acid, o-aminobenzenesulfonic acid, m-aminobenzenesulfonic acid, 4-amino-2-chlorotoluene-5-sulfonic acid, 4-amino-3-methylbenzene-1-sulfonic acid, 4-amino-5-methoxy-2-methylbenzenesulfonic acid, 2-amino-5-methylbenzene-1-sulfonic acid, 4-amino-2-methylbenzene-1-sulfonic acid, 5-amino-2-methylbenzene-1-sulfonic acid, 4-amino-3-methylbenzene-1-sulfonic acid, 4-acetamide-3-chlorobenzenesulfonic acid, 4-chloro-3-nitrobenzenesulfonic acid, p-chlorobenzenesulfonic acid, naphthalenesulfonic acid, methylnaphthalenesulfonic acid, propylnaphthalenesulfonic acid, butylnaphthalenesulfonic acid, pentylnaphthalenesulfonic acid, dimethylnaphthalenesulfonic acid, 4-amino-1-naphthalenesulfonic acid, 8-chloronaphthalene-1-sulfonic acid, naphthalenesulfonic acid formalin polycondensate and melaminesulfonic acid formalin polycondensate.

Examples of the organic sulfonic acid having two or more sulfonic acid group include ethanedisulfonic acid, butanedisulfonic acid, pentanedisulfonic acid, decanedisulfonic acid, m-benzenedisulfonic acid, o-benzenedisulfonic acid, p-benzenedisulfonic acid, toluenedisulfonic acid, xylenedisulfonic acid, chlorobenzenedisulfonic acid, fluorobenzenedisulfonic acid, aniline-2,4-disulfonic acid, aniline-2,5-disulfonic acid, dimethylbenzenedisulfonic acid, diethylbenzenedisulfonic acid, dibutylbenzenedisulfonic acid, naphthalenedisulfonic acid, methylnaphthalenedisulfonic acid, ethylnaphthalenedisulfonic acid, dodecylnaphthalenedisulfonic acid, pentadecylnaphthalenedisulfonic acid, butylnaphthalenedisulfonic acid, 2-amino-1,4-benzenedisulfonic acid, 1-amino-3,8-naphthalenedisulfonic acid, 3-amino-1,5-naphthalenedisulfonic acid, 8-amino-1-naphthol-3,6-disulfonic acid, 4-amino-5-naphthol-2,7-disulfonic acid, anthracenedisulfonic acid, butylanthracenedisulfonic acid, 4-acetamide-4'-isothiocyanatostilbene-2,2'-disulfonic acid, 4-acetamide-4'-isothiocyanatostilbene-2,2'-disulfonic acid, 4-acetamide-4'-maleimidylstilbene-2,2'-disulfonic acid, 1-acetoxypyrene-3,6,8-trisulfonic acid, 7-amino-1,3,6-naphthalenetrisulfonic acid, 8-aminonaphthalene-1,3,6-trisulfonic acid and 3-amino-1,5,7-naphthalenetrisulfonic acid.

Examples of the organic cyano compound include compounds having two or more cyano groups in a conjugated bond, for example, tetracyanoethylene, tetracyanoethylene oxide, tetracyanobenzene, tetracyanoquinodimethane and tetracyanoazanaphthalene.

The conductive composition of the present aspect may contain other components, if necessary.

For the purpose of adjusting film forming properties, film strength and the like, the other organic resin (F) can be used in combination.

As the organic resin (F), either of thermosetting and thermoplastic resins may be used as far as it is compatible with or dispersed in the conductive composition.

Specific examples thereof include polyester resins such as polyethylene terephthalate, polybutylene terephthalate and polyethylene naphthalate; polyimide resins such as polyimide and polyamideimide; polyamide resins such as polyamide 6, polyamide 6,6, polyamide 12 and polyamide 11; fluororesins such as polyvinylidene fluoride, polyvinyl fluoride, polytetrafluoroethylene and polychlorotrifluoroethylene; vinyl resins such as polyvinyl alcohol, polyvinyl ether, polyvinyl butyral, polyvinyl acetate and polyvinyl chloride; epoxy resins; xylene resins; aramid resins; polyurethane resins; polyurea resins; melamine resins; phenol resins; polyether; acrylic resins; and copolymer resins thereof.

In the present aspect, with the composition comprising a polyanion (A) in which an anion group is bonded with a main chain via an ester group, and a conjugated conductive polymer (B), as described above, it is made possible to obtain a conductive composition which has high electrical conductivity and is excellent in stability of electrical conductivity to the external environment and is also excellent in heat resistance, moisture resistance and long-term stability.

[Method for Preparing Conductive Composition]

The method for preparing the conductive composition of the present aspect will now be described.

The method of the present aspect comprises the step (1) of subjecting a monomer of a conjugated conductive polymer (B) (one or more polymerizable conjugated monomers (MZ) and, if necessary, other copolymerizable monomer) dissolved or dispersed in a solvent to chemical oxidation polymerization in the presence of a polyanion (A).

The doped conjugated conductive polymer has conventionally been prepared by polymerizing a conjugated conductive polymer and adding a dopant. In this case, the conjugated conductive polymer is liable to be aggregated and is therefore inferior in dispersibility and is also inferior in efficiency of imparting conductivity to the composition.

In the present aspect, by chemical oxidation polymerization of the conjugated conductive polymer (B) in the presence of the polyanion (A), as described above, the main chain of the conjugated conductive polymer (B) grows along the main chain of the polyanion (A) to obtain a regularly arranged conjugated conductive polymer (B), thus obtaining a conductive composition which contains a regularly arranged and well dispersed conjugated conductive polymer (B) and exhibits high electrical conductivity and is also excellent in stability of electrical conductivity to the external environment in a stable manner.

As described in the BACKGROUND ART, the conjugated conductive polymer is inferior in solvent solubility in general. However, in the present aspect, since the polyanion (A) coexists, as described above, the polymerization can proceed while dissolving the conjugated conductive polymer (B) which grows by the polymerization, and has excellent solvent solubility. Therefore, there can be obtained a composition which is excellent in dispersibility of the conjugated conductive polymer (B) and exhibits high electrical conductivity in a stable manner. Furthermore, since the resulting composition is liquid, a film is easily formed.

The step (1) includes the step of preparing raw materials (a polyanion (A), a monomer of a conjugated conductive polymer (B), an oxidizing agent and/or an oxidation polymerization catalyst) and mixing them, and the step of polymerizing the monomer of the conjugated conductive polymer (B) in a solution mixture.

The method for synthesizing the polyanion (A) is as described above. In case of mixing raw materials, the respective components may be dissolved and mixed in a solvent at a time, or the respective components may be mixed after previously dissolving the monomer, the oxidizing agent and/or the oxidation polymerization catalyst in the solvent, respectively.

The polymerization conditions are not specifically limited and the polymerization may be conducted in any manner, if necessary. Examples of the polymerization will be described in "EXAMPLES" of the present aspect.

The method of the present aspect can further comprise the step (2) of removing free ions from the solution containing the polyanion (A) and the resulting conjugated conductive polymer (B) by an ultrafiltration method, after the step (1).

The ultrafiltration method is a kind of membrane separation methods and is a technique of separating a component using an ultrafilter comprising a porous supporting base material and a polymer film formed on porous supporting base material, the polymer film containing pores having a diameter smaller than that of the porous supporting base material. In the present aspect, since a required polymer component does not penetrates through the film, cross flow filtration is preferably employed. If necessary, only small particles and impurities containing residual ions can be removed by carrying out an ultrafiltration treatment once or plural times while optionally diluting. In the present aspect, an ultrafilter having a fractionation molecular weigh of 1 to 1000 K is preferably used.

It is preferred that the method of the present aspect further includes the step (3) of adding a proton-containing solution. The step (3) may be carried out simultaneously with the step (2) or after the step (2).

The proton-containing solution used in the step (3) is not specifically limited, and a solution containing sulfuric acid, hydrochloric acid, phosphoric acid, nitric acid, a sulfonic acid compound and the like is used. By optionally carrying out the step (3), cations, which constitute a complex with an anion group, can be replaced by protones. Consequently, higher electrical conductivity can be obtained and free metal ions are removed, preferably.

The above method of the present aspect includes the step (1) of subjecting a monomer of a conjugated conductive polymer (B) dissolved or dispersed in a solvent to chemical oxidation polymerization in the presence of a polyanion (A). Consequently, as described above, it is made possible to obtain a conductive composition which has high electrical conductivity and is excellent in stability of electrical conductivity to the external environment and is also excellent in heat resistance, moisture resistance and long-term stability in a stable manner.

Since the method of the present aspect includes the step (2) of an ultrafiltration treatment, impurities containing residual ions can be removed. Therefore, according to the present aspect, deterioration of heat resistance, moisture resistance, long-term stability of the conjugated conductive polymer (B) and the like caused by residual ions can be suppressed.

EXAMPLES

**(Examples of the Aspect)**

Examples of the present aspect will now be described in detail, but the present aspect is not limited by the following examples.

(Preparation Examples 1 to 5)

Synthesis of polyanions (A1) to (A4) and (D1)

(Preparation Example 1)

To 100 ml of ion-exchange water, 43.4 g of sodium sulfonate ethyl methacrylate (manufactured by Nippon Nyukazai Co., Ltd. under the trade name of ANTOX) was added. While maintaining at 80°C under stirring, a complex oxidizing agent solution prepared by dissolving 0.114 g of ammonium persulfate and 0.04 g of ferric sulfate in 10 ml of ion-exchange water was added, followed by stirring for 3 hours while maintaining at the same temperature.

After the completion of the reaction, the reaction solution was cooled to room temperature. Then, the operation (X) of adding 1000 ml of ion-exchange water and 30 g of an aqueous 30% sulfuric acid solution in this order and concentrating the solution to 300 ml by an ultrafiltration method was repeated five times. Furthermore, the operation (Y) of adding 2000 ml of ion-exchange water was concentrating the solution to 300 ml by an ultrafiltration method was repeated until the filtrate is nearly neutralized.

Ultrafiltration conditions are as follows (the same as those in case of other examples).

Fractionation molecular weight of ultrafilter: 30 K
Cross flow system
Flow rate of liquid to be fed: 3000 cc/min
Membrane partial pressure: 0.114 Pa

The resulting concentrated solution was dried with heating in an oven at 100°C to obtain a polyanion (A1) (ethyl polymethacrylate sulfonic acid).

(Preparation Example 2)

In the same manner as in Preparation Example 1, except that the feed composition comprises 21.7 g of sodium sulfonate ethyl methacrylate and 20.6 g of sodium styrenesulfonate (manufactured by Tokyo Kasei Kogyo Co., Ltd.), a polyanion (A2) (poly(ethyl methacrylate sulfonic acid-styrenesulfonic acid)copolymer) was obtained.

(Preparation Example 3)

In the same manner as in Preparation Example 1, except that the feed composition comprises 21.7 g of sodium sulfonate ethyl methacrylate and 11.1 g of N-vinyl-2-pyrrolidone (manufactured by Tokyo Kasei Kogyo Co., Ltd.) and the amount of an aqueous sulfuric acid solution to be added in the concentration step (X) was adjusted to 20 g, a polyanion (A3) (poly(ethyl methacrylate sulfonic acid-N-vinyl-2-pyrrolidone)copolymer) was obtained.

(Preparation Example 4)

In the same manner as in Preparation Example 3, except that a solvent mixture of 60 ml of ion-exchange water and 40 ml of methanol was used in place of 100 ml of ion-exchange water and a composition comprising 24.5 g of sodium sulfonate butyl methacrylate (Asahi Kasei Finechem Co., Ltd.) and 13 g of hydroxyethyl acrylate (manufactured by Osaka Organic Chemical Industry Ltd.) was used, a polyanion (A4) (poly(butyl methacrylate sulfonic acid-hydroxyethyl acrylate)copolymer) was obtained.

(Preparation Example 5)

In the same manner as in Preparation Example 1, except that the feed composition comprises 41.2 g of sodium styrenesulfonate (manufactured by Tokyo Kasei Kogyo Co., Ltd.), a comparative polyanion (D1) (polystyrenesulfonic acid) was obtained.

(Example 1)

2.91 g (0.015 mols) of a polyanion (A1) and 0.68 g (0.01 mols) of pyrrole were dissolved in 300 ml of ion-exchange water. The resulting solution mixture was maintained at 0°C and an oxidation polymerization catalyst solution prepared by dissolving 2.85 g (0.0125 mols) of ammonium persulfate and 0.1 g of ferric sulfate in 100 ml of ion-exchange water was slowly added under stirring, followed by stirring at the same temperature for 3 hours (step (1)).

The operation of adding 2000 ml of ion-exchange water to the resulting reaction solution and concentrating the solution to 300 ml by an ultrafiltration method was repeated twice to remove free ions of the oxidation polymerization catalyst (step (2)). Furthermore, the operation of adding 100 ml of ion-exchange water and 20 g of an aqueous 10% sulfuric acid solution in this order to the concentrated solution and concentrating the solution to 300 ml by an ultrafiltration method was repeated five times, thereby conducting proton exchange (steps (3) and (2)). Furthermore, the operation of adding 3000 ml of ion-exchange water and concentrating the solution to 300 ml by an ultrafiltration method was repeated until the filtration is nearly neutralized (step (2)) to obtain a conductive composition (C1) as a blackish blue liquid.

The resulting composition was applied onto a glass plate and then dried in an oven at 125°C to obtain a 0.005 mm thick conductive film (M1).

(Examples 2 to 4)

In the same manner as in Example 1, except that the same mol number of polyanions (A2) to (A4) were used as the polyanion, conductive compositions (C2) to (C4) and conductive films (M2) to (M4) were obtained.

(Example 5)

To the conductive composition (C1) of Example 1, 0.1 g of p-toluenesulfonic acid as an anion compound (E) was added to obtain a conductive composition (C5). Using the resulting conductive composition, a conductive film (M5) was obtained in the same manner as in Example 1.

(Comparative Example 1)

In the same manner as in Example 1, except that the same mol number of a polyanion (D1) was used as the polyanion, comparative conductive compositions (C6) and conductive film (M6) were obtained.

(Comparative Example 2)

3.80 g (0.02 mols) of p-toluenesulfonic acid and 1.36 g (0.02 mols) of pyrrole were dissolved in 300 ml of ion-exchange water. While maintaining the resulting solution mixture at 0°C under stirring, an oxidation polymerization catalyst solution prepared by dissolving 5.70 g (0.025 mols) of ammonium persulfate and 0.1 g of ferric sulfate in 100 ml of ion-exchange water was slowly added, followed by stirring at the same temperature for 3 hours.

To the resulting reaction solution, 100 ml of ethanol was added and the precipitate was filtered under reduced pressure to obtain a solid. The operation of homogeneously dispersing the resulting solid in 200 ml of ion-exchange water, adding 100 ml of ethanol, filtering the precipitate under reduced pressure and washing the solid was repeated three times. The resulting solid was compressed and formed into a pellet and then vacuum-dried to obtain a conductive composition (C7) as a blackish blue solid (pellet). The solid was filled into a mold measuring 10 mm × 30 mm and then compressed under a pressure of 100 MPa to obtain a 0.1 mm thick conductive film (M7).

(Evaluation Item and Evaluation Procedure)

<Electrical Conductivity (S/cm)>

Using each of conductive films measuring 10 mm × 30 mm obtained in the respective examples, electrical conductivity at 25°C was measured by LORESTA (manufactured by Mitsubishi Chemical Corporation).

<Conductivity retention ratio (%)>

As described above, initial electrical conductivity $R_{25B}$ at 25°C was measured. The conductive film was allowed to stand 125°C for 500 hours and then the temperature was returned to 25°C. Electrical conductivity $R_{25A}$ was measured again and conductivity retention ratio was calculated by the following equation.

$$\text{Conductivity retention ratio (\%)} =$$

$$100 \times (R_{25B} - R_{25A})/R_{25B} \quad \text{<residual ion amount>}$$

0.5 g of each solid of the conductive compositions obtained in the respective examples was dipped in 50 ml of ultra pure water and treated at 95°C for 16 hours. The amount of sulfuric acid ions in the effluent was measured by ion chromatograph.

(Results)

The results are shown in Table 1.

As show in Table 1, in all Examples 1 to 5 in which polypyrrole as the conjugated conductive polymer (B) was polymerized in the presence of the polyanion (A) containing an alkyl methacrylate sulfonic acid and then an ultrafiltration treatment was conducted, there could be obtained a liquid conductive composition which is excellent in solubility of the conjugated conductive polymer (B) in a solvent and has high electrical conductivity, and is also excellent in thermostability and contains residual ions in the amount of not more than detection limit. This composition is excellent in film forming properties, and thus a conductive film having high electrical conductivity and excellent thermostability could be obtained.

To the contrary, in Comparative Example 1 in which the comparative polyanion (D) having no ester group was used, thermostability of electrical conductivity was drastically poor. In Comparative Example 2 in which the polyanion was not used and the ultrafiltration treatment was not conducted, thermostability of electrical conductivity was drastically poor and the amount of residual ions was drastically large, and thus the resulting composition was inferior.

Table 1

| | Electrical conductivity (S/cm) | Conductivity retention ratio (%) | Amount of residual ions (ppm) |
|---|---|---|---|
| Example 15 | 59 | 69 | < 10 |
| Example 16 | 47 | 43 | < 10 |
| Example 17 | 36 | 45 | < 10 |
| Example 18 | 53 | 65 | < 10 |
| Example 19 | 73 | 53 | < 10 |
| Comparative Example 7 | 35 | 0.01 | < 10 |
| Comparative Example 8 | 72 | 0.12 | 9300 |

INDUSTRIAL APPLICABILITY

The aspect of the present invention can provide a conductive composition which has high electrical conductivity and is excellent in stability of electrical conductivity to the external environment and is also excellent in heat resistance, moisture resistance and long-term stability, and a method for producing the same. Also the aspect of the present invention can provide a method for producing a conductive composition in which the amount of residual ions is reduced. The conductive composition and the method for preparing the same of the present aspect can be preferably employed for various purposes which require conductivity, for example, conductive coating materials, antistatic agents, electromagnetic wave shielding materials, conductor materials which require transparency, battery materials, capacitor materials, conductive adhesive materials, sensors, electric device materials, semiconductor materials, electrostatic copying materials, photosensitive members, transfer materials, intermediate transfer materials, and carrying members for printer and the like and electrophotographic materials.

**Claims**

1. A conductive composition comprising a polyanion (A), in which an anion group is bonded with a main chain via an ester group, and a conjugated conductive polymer (B).

2. The conductive composition according to claim 1, wherein, in the polyanion (A), the anion group is bonded with the ester group via at least one of an aromatic ring and an alkylene group which has a substituent optionally.

3. The conductive composition according to claim 1, wherein the anion group is a sulfonic acid group.

4. The conductive composition according to claim 1, further comprising an anion compound (E) other than the polyanion (A).

5. The conductive composition according to claim 1, which is obtained by chemical oxidation polymerization of a monomer of the conjugated conductive polymer (B) in the presence of the polyanion (A).

6. A method for preparing the conductive composition according to claim 1, which comprises:

(1) subjecting a monomer of a conjugated conductive polymer (B) dissolved or dispersed in a solvent to chemical oxidation polymerization in the presence of a polyanion (A), and
(2) removing free ions by an ultrafiltration method after the above step.

7. The method for preparing the conductive composition according to claim 6, further comprising the step of: (3) adding a proton-containing solution.

**Patentansprüche**

1. Leitende Zusammensetzung, umfassend ein Polyanion (A), wobei eine Aniongruppe mit einer Hauptkette über eine Estergruppe gebunden ist, und ein konjugiertes Polymer (B).

2. Leitende Zusammensetzung nach Anspruch 1, wobei in dem Polyanion (A) die Aniongruppe mit der Estergruppe über mindestens einen aromatischen Ring und eine Alkylengruppe, die optional einen Substituenten hat, gebunden ist.

3. Leitende Zusammensetzung nach Anspruch 1, wobei die Aniongruppe eine Sulfonsäuregruppe ist.

4. Leitende Zusammensetzung nach Anspruch 1, des Weiteren umfassend eine Anionverbindung (E), die nicht das Polyanion (A) ist.

5. Leitende Zusammensetzung nach Anspruch 1, die durch chemische Oxidationspolymerisation eines Monomers des konjugierten leitenden Polymers (B) in Gegenwart des Polyanions (A) erhalten wird.

6. Verfahren zur Herstellung der leitenden Zusammensetzung nach Anspruch 1, umfassend:

(1) Unterziehen eines Monomers eines konjugierten leitenden Polymers (B), das in einem Lösemittel aufgelöst oder dispergiert ist, einer chemischen Oxidationspolymerisation in Gegenwart eines Polyanions (A), und
(2) Entfernen freier Ionen durch ein Ultrafiltrationsverfahren nach dem oben genannten Schritt.

7. Verfahren zur Herstellung der leitenden Zusammensetzung nach Anspruch 6, des weiteren umfassend folgenden Schritt:

(3) Hinzugeben einer protonenhältigen Lösung.

**Revendications**

1. Composition conductrice comprenant un polyanion (A), dans laquelle un groupe anionique est lié à une chaîne principale via un groupe ester, et un polymère conducteur conjugué (B).

2. Composition conductrice selon la revendication 1, dans laquelle, dans le polyanion (A), le groupe anionique est lié au groupe ester via au moins un cycle aromatique et un groupe alkylène qui a éventuellement un substituant.

3. Composition conductrice selon la revendication 1, dans laquelle le groupe anionique est un groupe acide sulfonique.

4. Composition conductrice selon la revendication 1, comprenant en outre un composé anionique (E) autre que le polyanion (A).

5. Composition conductrice selon la revendication 1, qui est obtenue par polymérisation par oxydation chimique d'un monomère du polymère conducteur conjugué (B) en présence du polyanion (A).

6. Procédé de préparation de la composition conductrice selon la revendication 1, qui comprend :

(1) la soumission d'un monomère d'un polymère conducteur conjugué (B) dissous ou dispersé dans un solvant à une polymérisation par oxydation chimique en présence d'un polyanion (A), et
(2) l'élimination des ions libres par un procédé d'ultrafiltration après l'étape ci-dessus.

7. Procédé de préparation de la composition conductrice selon la revendication 6, qui comprend en outre l'étape consistant à :

(3) ajouter une solution contenant des protons.

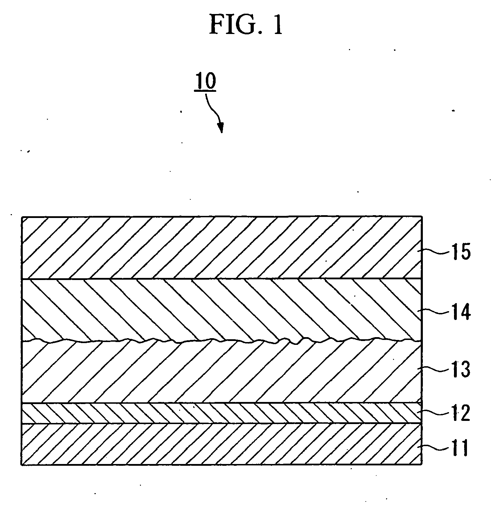

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004109702 A
- JP HEI06208198 B
- JP HEI07238149 B